# EUROPEAN PATENT SPECIFICATION

(11) **EP 1 728 774 B1**
(45) Date of publication and mention of the grant of the patent: **05.08.2009**
(21) Application number: 06114683.3
(22) Date of filing: 30.05.2006
(51) Int. Cl.: C04B 35/565

(54) **Oxide-bonded silicon carbide material**
Oxidgebundenes Siliziumkarbidmaterial
Matériau de carbure de silicium lié par un oxyde

(30) Priority: 01.06.2005 JP 2005161327
(43) Date of publication of application: 06.12.2006
(73) Proprietor: NGK INSULATORS, LTD., Nagoya City, Aichi Pref. (JP)
(72) Inventor: Komiyama, Tsuneo, Nagoya-shi Aichi 467-8530 (JP); Yamada, Toshiki, Kani-gun Gifu 505-0112 (JP)
(74) Representative: TBK-Patent

(56) References cited:
- PATENT ABSTRACTS OF JAPAN vol. 1995, no. 10, 30 November 1995 (1995-11-30) -& JP 07 187786 A (NGK INSULATORS LTD; others: 01), 25 July 1995 (1995-07-25)
- PATENT ABSTRACTS OF JAPAN vol. 1996, no. 11, 29 November 1996 (1996-11-29) -& JP 08 178548 A (NGK INSULATORS LTD; N G K ADRECH KK), 12 July 1996 (1996-07-12)
- PATENT ABSTRACTS OF JAPAN vol. 016, no. 461 (C-0988), 25 September 1992 (1992-09-25) -& JP 04 164862 A (NGK INSULATORS LTD; others: 01), 10 June 1992 (1992-06-10)
- PATENT ABSTRACTS OF JAPAN vol. 1995, no. 10, 30 November 1995 (1995-11-30) -& JP 07 187785 A (NGK INSULATORS LTD; others: 01), 25 July 1995 (1995-07-25)
- PATENT ABSTRACTS OF JAPAN vol. 018, no. 542 (C-1261), 17 October 1994 (1994-10-17) -& JP 06 191944 A (NGK INSULATORS LTD; others: 01), 12 July 1994 (1994-07-12)
- PATENT ABSTRACTS OF JAPAN vol. 018, no. 163 (C-1181), 18 March 1994 (1994-03-18) -& JP 05 330916 A (TOSHIBA CERAMICS CO LTD), 14 December 1993 (1993-12-14)
- PATENT ABSTRACTS OF JAPAN vol. 018, no. 046 (C-1157), 25 January 1994 (1994-01-25) -& JP 05 270916 A (NGK INSULATORS LTD; others: 01), 19 October 1993 (1993-10-19)
- DATABASE WPI Section Ch, Week 198721 Derwent Publications Ltd., London, GB; Class L02, AN 1987-146567 XP002391894 -& JP 62 083371 A (FUJI YOGYO KK) 16 April 1987 (1987-04-16)

## Description

### BACKGROUND OF THE INVENTION

### Field of the Invention

The present invention relates to an oxide-bonded silicon carbide material.

### Description of the Related Art

Heretofore, a silicon carbide (SiC) refractory material occupies an industrially important position owing to its excellent resistances to heat and fire, and the material is frequently used in kiln tools for firing ceramics, such as a shelf board (setter), a floor plate, a sheath, a setter support, a beam, and a roller. As a type of such SiC refractory material, there has been known a so-called oxide-bonded SiC material which is formed by kneading and forming SiC particles together with a small amount of a metal oxide or the like, firing the resultant in an oxidizing atmosphere to thereby partially oxidize the SiC particles, and bonding the SiC particles by silicon dioxide (SiO₂) generated by the partial oxidization of the particles. Since this oxide-bonded SiC sintered article is inexpensive, the article ahs been widely used as materials for the kiln tools for firing the ceramics (See Japanese Patent No. 3373312).

However, the oxide-bonded SiC refractory material is low in the mechanical strength and unsatisfactory in the spalling resistance, and therefore generally is short in the product life, compared with a so-called Si-impregnated SiC or re-crystallized SiC refractory material which is formed by bonding the SiC particles by a bonding material made of silicon nitride or the like.

Moreover, in recent years, since quick firing processes have been often employed in order to improve the production efficiency and save energy, a load imposed on the kiln tools also increases. From such background, there is a demand for improvements of characteristics of the oxide-bonded SiC refractory material, such as a spalling resistance, an oxidation resistance, and a creep resistance, but there are many conflicting factors in the improvements of these characteristics as a whole, and it is difficult to improve the characteristics with retaining a good balance therebetween.

To solve the above-described problems, for example, there have been proposed in said Japanese Patent a kiln tool made of oxide-bonded SiC and a method of manufacturing a kiln tool by using powder obtained by adding 0.01 to 0.7 mass% of V₂O₅, 0.01 to 0.7 mass% of CaO, and 0.01 to 5 mass% of clay to SiC powder having a maximum particle diameter of 4 mm or less.

However, the oxide-bonded SiC refractory material is low in the mechanical strength, compared with the Si-impregnated SiC or re-crystallized SiC refractory material. Therefore, in a case where the material is used as a product, the product needs to be formed to be massive. It cannot be said that the material has a sufficient creep resistance or thermal shock resistance.

### SUMMARY OF THE INVENTION

The present invention has been developed in view of such problems of the conventional technology, and the object thereof is to provide an oxide-bonded silicon carbide material having mechanical strength favorably comparable to that of a presently mainly used high-strength ceramic material (e.g., alumina, Si-impregnated SiC, or re-crystallized SiC refractory material); being capable of providing an improved mass productivity, and easier production of not only large-scaled products but also even products having complicated shapes because of less in expansion and/or contraction at a time when the material is formed into a product by firing; and, larger reduction in manufacturing costs due to the capability of being fired in the atmosphere.

To achieve the above-described object, the present invention provides the following oxide-bonded silicon carbide material.

[1] An oxide-bonded silicon carbide material substantially made of silicon carbide, comprising crystal particles of silicon carbide, grain boundaries and pores therebetween, and having a structure in which the crystal particles of silicon carbide are bonded via an oxide containing silicon dioxide as a main component, wherein a bending strength both at ordinary temperature of 22°C and a high temperature of 1300°C is 100 MPa or more, and a bulk specific gravity is 2.65 or more,
wherein the crystal particles of silicon carbide are mixed crystal particles containing aggregates having a substantially large particle diameter whose maximum particle diameter of the aggregate is in a range of 50 to 200 µm and fine particles made of silicon carbide whose maximum particle diameter is 10 µm or less,
wherein the fine particles are uniformly dispersed around the vicinity of aggregates, and
wherein bonding portions have a structure being made of a mixed state of fine particles and an oxide containing silicon dioxide as a main component,
wherein the bonding portions where the silicon carbide crystal particles are bonded to one another are made of an oxide containing silicon dioxide as a main component, and contain further, as a minor component, at least one element selected from the group consisting of transition metal elements of atomic numbers 22 to 29, the oxide-bonded silicon carbide material containing 85 to 99.5 mass% of silicon carbide; 10 to 0.45 mass% of silicon dioxide; and 5.0 to 0.05 mass% of at least one element selected from the group consisting of the transition metal elements of atomic numbers 22 to 29 as a minor component in terms of an oxide and wherein the oxide-bonded silicon carbide material according to any one of [1] to [6], is obtainable by cast- forming a formed article which is a precursor of the oxide-bonded silicon carbide material, and then firing the formed article in the atmosphere.

[6] The oxide-bonded silicon carbide material according to any one of [1] to [5], wherein a film is formed on the surface of the material; said film being made of silicon dioxide, as a main component, and containing further at least one element selected from the group consisting of the transition metal elements of atomic numbers 22 to 29.

The present inventive oxide-bonded silicon carbide material has a mechanical strength comparable to that of the presently mainly used high-strength ceramic materials (e.g., alumina, Si-impregnated SiC, or re-crystallized SiC refractory material); is capable of improving in mass productivity, manufacturing easily not only large-sized products but also products having complicated shapes, and reducing manufacturing to great extent.

### BRIEF DESCRIPTION OF THE DRAWINGS

FIG. 1 is a microphotograph of scanning type electronic microscope (SEM) showing a fine structure of an oxide-bonded silicon carbide material in the present invention; and
FIG. 2 is a microphotograph of scanning type electronic microscope (SEM) showing a fine structure of a conventional oxide-bonded silicon carbide material.

### DESCRIPTION OF THE PREFERRED EMBODIMENT

An embodiment of the present invention will be described hereinafter, but it should be understood that the present invention is not limited to the following embodiment and that the present invention is appropriately changed in design, and modified based on common knowledge of a person skilled in the art without departing from the scope of the present invention.

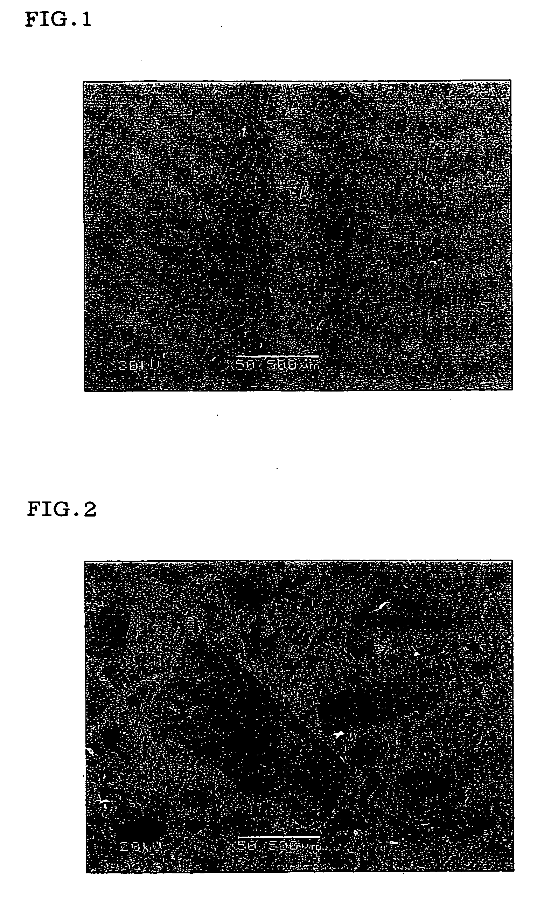

FIG. 1 is a microphotograph of scanning type electronic microscope (SEM) showing a fine structure of an oxide-bonded silicon carbide material in the present invention, and FIG. 2 is an SEM microphotograph showing a fine structure of a conventional oxide-bonded silicon carbide material.

In the present invention, an oxide-bonded silicon carbide material is a material substantially made of silicon carbide; said material including crystal particles of silicon carbide, grain boundaries and pores formed therebetween, and having a structure in which the crystal particles of silicon carbide are bonded via an oxide containing silicon dioxide as a main component, wherein bending strength of the material at both ordinary temperature of 22°C and a high temperature of 1300°C is 100 MPa or more, and a bulk specific gravity is 2.65 or more as defined in claim 1.

Here, major characteristics of the oxide-bonded silicon carbide material of the present invention lie in the achievement of increasing the bending strength to four times or more, compared with that of the conventional oxide-bonded silicon carbide material since one may form a denser material after firing, with controlling the structure being composed of silicon carbide crystal particles and silicon dioxide. The difference in the structure may be realized by comparing the microphotographs shown as Fig. 1 and Fig. 2.

That is, in the oxide-bonded silicon carbide material of the present invention, the bending strength at both ordinary temperature and a high temperature is preferably 100 MPa or more (more preferably 120 to 300 MPa, further preferably 150 to 300 MPa). As a result of controlling the microstructure of the silicon carbide crystal particles and silicon dioxide in an optimum manner by firing the starting material to give a denser product with controlling the structure of silicon carbide crystal particles and silicon dioxide, the bending strength of the resultant at both ordinary temperature and a high temperature is 100 MPa or more. It is not preferable that the bending strength of the resultant would become less than 100 MPa when the microstructure is not appropriate due to the unfavorable control of the microstructure, and unfavorable firing for making the resultant denser.

Moreover, in the oxide-bonded silicon carbide material of the present invention, the bulk specific gravity is 2.65 or more (more preferably 2.65 to 2.90, further preferably 2.65 to 2.85).

Furthermore, in the oxide-bonded silicon carbide material of the present invention, a maximum temperature tolerable to thermal shock is 600°C or more, which is preferable during actual use of the material as a product.

Next, there will be described further characteristics of the oxide-bonded silicon carbide material of the present invention. The present crystal particles of silicon carbide are a mixture of aggregates having substantially a large particle diameter whose maximum particle diameter of the aggregate is in a range of 50 to 200 µm and fine particles of fine crystal particles of silicon carbide whose maximum particle diameter is 10 µm or less.

At this time, in the oxide-bonded silicon carbide material of the present invention, the fine particles are uniformly dispersed around the vicinity of the aggregates, and bonding portions have a structure in which the fine particles are in a state being mixed with an oxide containing silicon dioxide as a main component.

It is to be noted that the maximum particle diameter of the aggregates for use in the present invention is 50 to 200 µm (more preferably 50 to 120 µm). When the maximum particle diameter of the aggregates exceeds 200 µm, the crystal particles of silicon carbide collapse. Therefore, the bending strength at both ordinary temperature and a high temperature deteriorates. On the other hand, in a case where the maximum particle diameter of the aggregates is below 50 µm, a filling density of the silicon carbide particles lowers, and a density of the resultant product lowers. When the density lowers, a porosity increases, which means that a specific surface area increases. When the specific surface area increases and when the material is used in an oxidizing atmosphere at a high temperature, an area of the product which comes in contact with oxygen increases, so that silicon carbide is easily oxidized. This fact shortens a life of the material. Moreover, oxidation during firing unfavorably easily occurs.

Moreover, the fine particles for use in the present invention contain fine powder having a diameter of substantially 10 µm or less, more preferably 0.05 to 10 µm, further preferably 1 µm or less. Accordingly, since spaces among the grain boundaries of the crystal particles as the aggregates are filled with the fine particles, the densest filling may be realized. This contributes to the firm bonding of the silicon carbide crystal particles as the aggregates to each other. That is, the mixed particles (fine silicon carbide) containing the aggregates and the fine particles are oxidized during firing, and bonding portions where the aggregates are bonded to one another are formed by the resultant silicon dioxide (an oxide). The bonding portions may contribute to improvement of the bending strength of the obtained oxide-bonded silicon carbide material at both ordinary temperature and a high temperature.

Especially in the present invention, the oxide-bonded silicon carbide material is blended with the aggregates including 20 to 55 mass% of silicon carbide particles having a particle diameter of 100 to 200 µm, and 2 to 18 mass% of silicon carbide particles having a particle diameter of 50 to 100 µm. Moreover, the material is blended with the fine particles including 10 to 35 mass% of silicon carbide particles having a particle diameter of 1 to 10 µm, and 15 to 45 mass% of silicon carbide particles having a particle diameter of 1 µm or less (more preferably 0.05 to 1 µm), provided that the amount of the aggregates and fine particles is 100 mass % in total. Accordingly, the characteristics of the present invention may be exhibited at the maximum.

Moreover, in the oxide-bonded silicon carbide material of the present invention, the bonding portions where the crystal particles of silicon carbide are bonded to one another are made of an oxide containing silicon dioxide as a main component. Silicon dioxide mainly has a function of bonding silicon carbide crystal particles. If a content of silicon dioxide is excessively large (above 10 mass %), a creep resistance of the oxide-bonded silicon carbide material is lowered. On the other hand, if a content of silicon dioxide is excessively small (below 0.45 mass %), the function of bonding the silicon carbide crystal particles is lowered, and therefore the bending strength at both ordinary temperature and a high temperature deteriorates.

Furthermore, in the oxide-bonded silicon carbide material of the present invention, the bonding portions where the crystal particles of silicon carbide are bonded to one another are made of an oxide containing silicon dioxide as the main component, and the bonding portions contain, as a minor component, at least one element selected from the group consisting of transition metal elements of atomic numbers 22 to 29.

The material contains 85 to 99.5 mass% of silicon carbide, 10 to 0.45 mass% of silicon dioxide, and 5.0 to 0.05 mass% of at least one element selected from the group consisting of the transition metal elements of atomic numbers 22 to 29 a minor component in terms of an oxide.

That is, in the oxide-bonded silicon carbide material of the present invention, at least one of the transition metal elements of atomic numbers 22 to 29 is preferably added as the minor component to silicon dioxide constituting the bonding portions where the silicon carbide crystal particles are bonded to one another.

At this time, if an amount of the minor component to be added is excessively large (above 5 mass %), the bending strength at the high temperature deteriorates, and resistances to oxidation and creep also are weakened. On the other hand, if the amount of the minor component to be added is excessively small (below 0.05 mass %), the oxidations resistance is weakened.

Moreover, in the oxide-bonded silicon carbide material of the present invention, a film whose main component is silicon dioxide containing at least one element selected from the group consisting of the transition metal elements of atomic numbers 22 to 29 is preferably formed on the surface of the material. When the film is formed on the surface of silicon carbide, it is possible to avoid problems of oxidation caused while the material is used as a product, reaction caused in a case where the material directly comes into contact with silicon carbide.

Next, main characteristics of the oxide-bonded silicon carbide material of the present invention lie in the steps of: (1) prepare a slurry by appropriately adjusting the particle diameter in blending of silicon carbide and silicon dioxide, and adding the minor component, water or the like; (2) cast-forming a formed article which is a precursor of the oxide-bonded silicon carbide material, and thereafter drying the article; and (3) then firing the article in the atmosphere. An amount of water to be added to the slurry prepared in (1) is adjusted into 8 to 16 mass%. Accordingly, dimensional expansion of the fired product can be preferably suppressed into 0 to 0.5%.

It is to be noted that a dispersant and/or a binder is preferably added to the slurry prepared in (1). At this time, the dispersant is preferably added to the slurry prepared in (1), but the binder does not have to be necessarily added. There is not any special restriction on the dispersant, but there is preferably usable ammonium polycarboxylate, acrylic ester copolymer, polyethylene imine, or sodium silicate. There is not any special restriction on the binder, and there is preferably usable polyacrylic emulsion, caroxymethyl cellulose, or polyvinyl alcohol.

Here, in the oxide-bonded silicon carbide material of the present invention, it is important to cast-form the slurry prepared in (1) into the formed article which is the precursor of the oxide-bonded silicon carbide material. Accordingly, in the oxide-bonded silicon carbide material of the present invention, the structure of the silicon carbide crystal particles and silicon dioxide during the firing can be controlled, and densely sintered. Therefore, the bending strength at both ordinary temperature and a high temperature may be fourfold or more as compared with the conventional oxide-bonded silicon carbide material. Since the oxide-bonded silicon carbide material of the present invention is cast-formed, the material has strength comparable favorably to that of a presently mainly used high-strength ceramic material (e.g., alumina, Si-impregnated SiC, or re-crystallized SiC refractory material). Moreover, the product is less expanded and/or contracted during the firing. Therefore, it is possible to improve mass productivity and to facilitate the manufacturing of large-sized products, and even products having complicated shapes may be easily manufactured.
Since inexpensive cast-forming is performed, production is possible without requiring any investment in large-sized pressing device or extruder. Furthermore, in the oxide-bonded silicon carbide material of the present invention, the firing under the atmosphere is possible, whereas an atmosphere adjusting furnace is essential in a case where the Si-impregnated SiC or re-crystallized SiC refractory material is manufactured. In consequence, any expensive equipment is not required, and manufacturing costs may largely be reduced in the present invention.

It is to be noted that the cast-forming is a method of dispersing a liquid such as water in a ceramic or the like to form a slurry; pouring the slurry into a form to solidify the slurry; and making the powder into a predetermined shape. The method has advantages that a density of the resultant formed article may be secured at a necessary level and that the formed article having a complicated shape may be comparatively easily manufactured.

### [Examples]

The present invention will be described hereinafter in more detail in accordance with examples, but the present invention is not limited to these examples.

### (Examples 1 to 8, Comparative Examples 1 to 3)

First, compositions were prepared so as to achieve SiC and SiO₂ ratios after firing shown in Table 1.
Moreover, as a minor component, an additive shown in Table 1 was added as much as 1 mass% in terms of an oxide. Furthermore, a dispersant (substance name: ammonium polycarboxylate), a binder (substance name: polyacrylic emulsion), and water were added, and the resultant material was mixed by a 50 kg ball mill for 24 hours to obtain each slurry. The resultant slurry was defoamed in vacuum for 30 minutes, and the slurry was cast in a plaster mold. Such cast-forming obtained each formed article. The resultant formed articles were fired in the atmosphere at 1400°C, and each of sintered articles (size: 400 mm x 400 mm x 10 mm) was obtained as an oxide-bonded silicon carbide material. Characteristics (bulk specific gravity, bending strengths at both ordinary temperature and 1300°C, resistance to oxidation at 1300°C, creep resistance, and maximum temperature tolerable to thermal shock) of the resultant sintered articles were measured, and the results are shown in Table 1.

It is to be noted that density (bulk density) and bending strength of the resultant sintered articles were measured by the following methods.
(1) Measurement of Density (Bulk Density) of Sintered Article
   The density (bulk density) was measured by "JIS R 2205, Measurement Method of Apparent Porosity, Water Absorption, and Specific Gravity of Refractory Brick".
(2) Bending Strength Test of Sintered Article
   The bending strength was measured with a four-point bending strength in "JIS R 1601, Test Method of Bending Strength of Fine Ceramic".

**[Table 1]**

| | Composition [mass%] | | Additive* | | Blend | | Density | Bending strength [MPa] | | Resistance to oxidation at 1300°C [ppm/hr] | CreepResistance[mm] | Maximum temperature tolerable to thermal shock (°C) |
|---|---|---|---|---|---|---|---|---|---|---|---|---|
| | SiC | SiO₂ | Atomic No. of minor component | Atomic symbol of minor component | Maximum particle diameter (µm) | Present or absent of particles of 10 µm or less | Bulk specific gravity | Ordinary temperature (22°C) | 1300°C | | | |
| Example 1 | 95. | 4 | 22 | Ti | 100 | Present | 2.73 | 244 | 235 | 0.7 | 0.5 | 650 |
| Example 2 | 95 | 4 | 23 | V | 100 | Present | 2.75 | 213 | 221 | 0.9 | 0.4 | 750 |
| Example 3 | 95 | 4 | 24 | Cr | 100 | Present | 2.74 | 185 | 203 | 0.5 | 0.3 | 650 |
| Example 4 | 95 | 4 | 25 | Mn | 100 | Present | 2.75 | 167 | 175 | 0.7 | 0.4 | 700 |
| Example 5 | 95 | 4 | 26 | Fe | 100 | Present | 2.75 | 194 | 189 | 0.6 | 0.5 | 600 |
| Example 6 | 95 | 4 | 27 | Co | 100 | Present | 2.75 | 175 | 182 | 0.8 | 0.6 | 650 |
| Example 7 | 95 | 4 | 28 | Ni | 100 | Present | 2.75 | 234 | 210 | 0.8 | 0.3 | 700 |
| Example 8 | 95 | 4 | 29 | Cu | 100 | Present | 2.74 | 226 | 230 | 0.7 | 0.3 | 650 |
| Comparative Example 1 | 95 | 4 | 19 | K | 100 | Present | 2.63 | 150 | 10 | 10.1 | 5 | 325 |
| Comparative Example 2 | 95 | 4 | 21 | Sc | 100 | Present | 2.61 | 65 | 31 | 15.3 | 3 | 300 |
| Comparative Example 3 | 95 | 4 | 30 | Zn | 100 | Present | 2.61 | 62 | 34 | 9.5 | 4 | 300 |

| | | | | | | | | | | | | |
|---|---|---|---|---|---|---|---|---|---|---|---|---|
| *: Amount of additive added: 1 mass% in terms of oxide | | | | | | | | | | | | |

(Discussions: Examples 1 to 8, Comparative Examples 1 to 3)
As shown in Table 1, in Examples 1 to 8, since a transition metal element Ti, V, Cr, Mn, Fe, Co, Ni, or Cu of atomic numbers 22 to 29 is added as a minor component to slurry, all characteristics (bending strengths at ordinary temperature and 1300°C, resistance to oxidation at 1300°C, creep resistance, and temperature of bearable thermal shock) of the resultant sintered article are satisfactory. On the other hand, in Comparative Examples 1 to 3, the resultant sintered articles have insufficient characteristics.

### (Examples 9 to 21, Comparative Examples 4 to 28)

First, the blends of SiC, SiO₂, and V₂O₅ shown in Table 2 were prepared so as to obtain the compositions as shown in Table 2 after firing. Furthermore, a dispersant (substance name: ammonium polycarboxylate), a binder (substance name: polyacrylic emulsion), and water were added, and the resultant material was mixed by a 50 kg ball mill for 24 hours to obtain each slurry. The resultant slurry was defoamed in vacuum for 30 minutes, and the slurry was cast in a plaster form. Such cast-forming obtained each formed article. The resultant formed article was fired in the atmosphere at 1400°C, and a sintered article (size: 400 mm × 400 mm × 10 mm) was obtained as an oxide-bonded silicon carbide material. Characteristics (bulk specific gravity, bending strengths at both ordinary temperature and 1300°C, resistance to oxidation at 1300°C, creep resistance, and maximum temperature tolerable to thermal shock) of the resultant sintered articles were measured, and the results are shown in Table 2. It is to be noted that Example 17 is similar to Example 2.

**[Table 2]**

| | Composition [mass%] | | | SiC particle blend Density | | Bending | Bending strength [MPa] | | Resistance to oxidation at 1300°C [ppm/hr] | Creep Resistance [mm] | Maximum temperature tolerable to thermal shock (°C) |
|---|---|---|---|---|---|---|---|---|---|---|---|
| | SiC | SiO₂ | V₂O₅ | Maximum particle diameter (µm) | Present or absent of particles of 10 µm or less | Bulk specific gravity | Ordinary temperature (22°C) | 1300 °C | | | |
| Example 9 | 85 | 10 | 5 | 100 | Present | 2.65 | 165 | 172 | 0.8 | 0.5 | 650 |
| Example 10 | 87 | 8 | 5 | 100 | Present | 2.77 | 213 | 211 | 0.7 | 0.7 | 775 |
| Example 11 | 90 | 9.95 | 0.05 | 100 | Present | 2.75 | 179 | 180 | 0.8 | 0.8 | 700 |
| Example 12 | 90 | 9.9 | 0.1 | 100 | Present | 2.75 | 181 | 182 | 0.1 | 0.6 | 725 |
| Example 13 | 90 | 9 | 1 | 100 | Present | 2.76 | 200 | 203 | 0.9 | 0.5 | 750 |
| Example 14 | 93 | 6.5 | 0.5 | 100 | Present | 2.70 | 189 | 179 | 0.7 | 0.5 | 700 |
| Example 15 | 95 | 4 | 1 | 100 | Present | 2.75 | 210 | 211 | 0.7 | 0.4 | 725 |
| Example 16 | 95 | 4 | 1 | 200 | Present | 2.74 | 153 | 149 | 0.7 | 0.6 | 675 |
| Example 17 | 95 | 4 | 1 | 100 | Present | 2.75 | 213 | 221 | 0.9 | 0.4 | 750 |
| Example 18 | 95 | 4 | 1 | 50 | Present | 2.70 | 257 | 267 | 0.9 | 0.6 | 725 |
| Example 19* | 95 | 4 | 1 | 30 | Present | 2.65 | 312 | 310 | 0.7 | 0.6 | 700 |
| Example 20 | 99 | 0.8 | 0.2 | 100 | Present | 2.73 | 190 | 193 | 0.7 | 0.7 | 675 |
| Example 21 | 99.5 | 0.45 | 0.05 | 100 | Present | 2.76 | 135 | 145 | 0.6 | 0.7 | 700 |
| Comparative Example 4 | 70 | 29 | 1 | 100 | Present | 2.43 | 132 | 95 | 1.3 | 4.5 | 375 |
| Comparative Example 5 | 70 | 15 | 15 | 100 | Present | 2.41 | 151 | 31 | 16.1 | 2.8 | 350 |
| Comparative Example 6 | 80 | 13 | 7 | 100 | Present | 2.49 | 131 | 42 | 5.9 | 2.5 | 325 |
| Comparative Example 7 | 80 | 19 | 1 | 100 | Present | 2.51 | 153 | 118 | 2.1 | 3.1 | 350 |
| Comparative Example 8 | 80 | 19.98 | 0.02 | 100 | Present | 2.51 | 131 | 120 | 20.1 | 3.8 | 350 |
| Comparative Example 9 | 80 | 17 | 3 | 100 | Present | 2.53 | 133 | 38 | 3.0 | 2.9 | 375 |
| Comparative Example 10 | 84 | 14 | 2 | 100 | Present | 2.55 | 142 | 131 | 2.3 | 2.3 | 300 |
| Comparative Example 11 | 84 | 9 | 7 | 100 | Present | 2.55 | 154 | 35 | 5.4 | 1.5 | 375 |
| Comparative Example 12 | 88 | 6 | 6 | 100 | Present | 2.70 | 183 | 62 | 3.3 | 1.6 | 375 |
| Comparative Example 13 | 90 | 0.3 | 9.7 | 100 | Present | 2.71 | 78 | 48 | 13.1 | 1.3 | 325 |
| Comparative Example 14 | 90 | 0.5 | 9.5 | 100 | Present | 2.70 | 136 | 50 | 10.3 | 1.4 | 325 |
| Comparative Example 15 | 90 | 1 | 9 | 100 | Present | 2.73 | 188 | 57 | 10.1 | 1.4 | 350 |
| Comparative Example 16 | 90 | 4 | 6 | 100 | Present | 2.71 | 184 | 66 | 5.1 | 1.5 | 350 |
| Comparative Example 17 | 90 | 10 | 0 | 100 | Present | 2.77 | 177 | 44 | 30.5 | 0.5 | 375 |
| Comparative Example 18 | 90 | 9.97 | 0.03 | 100 | Present | 2.70 | 167 | 153 | 11.3 | 0.5 | 300 |
| Comparative Example 19 | 90 | 4 | 6 | 100 | Present | 2.70 | 200 | 50 | 3.1 | 1.3 | 350 |
| Comparative Example 20 | 90 | 3 | 7 | 100 | Present | 2.69 | 214 | 45 | 5.3 | 1.2 | 350 |
| Comparative Example 21 | 95 | 4 | 1 | 1000 | Present | 2.81 | 43 | 42 | 0.9 | 0.5 | 325 |
| Comparative Example 22 | 95 | 4 | 1 | 700 | Present | 2.75 | 52 | 53 | 0.6 | 0.4 | 375 |
| Comparative Example 23 | 95 | 4 | 1 | 500 | Present | 2.72 | 68 | 66 | 0.7 | 0.6 | 375 |
| ComparativeExample 24 | 95 | 4 | 1 | 200 | Absent | 2.43 | 50 | 49 | 1.3 | 0.5 | 325 |
| Example 25 | 95 | 4 | 1 | 100 | Absent | 2.35 | 53 | 50 | 1.2 | 0.5 | 300 |
| Comparative Example 26 | 95 | 4 | 1 | 50 | Absent | 2.27 | 55 | 53 | 1.5 | 0.6 | 300 |
| Comparative Example 27 | 95 | 4 | 1 | 20 | Present | 2.55 | 151 | 149 | 2.1 | 0.5 | 325 |
| Comparative Example 28 | 99.8 | 0.1 | 0.1 | 100 | Present | 2.75 | 50 | 46 | 0.8 | 0.7 | 350 |

| | | | | | | | | | | | |
|---|---|---|---|---|---|---|---|---|---|---|---|
| *outside of the invention | | | | | | | | | | | |

(Consideration: Examples 9 to 21, Comparative Examples 4 to 28)
As seen from the results of Table 2, in Examples 9 to 21, SiC is obtained by adding fine particles having a maximum particle diameter of 10 µm or less to aggregate particles having a maximum particle diameter of 50 to 200 µm. After cast-forming the slurry prepared so as to obtain a fired composition of SiC, 0.05 to 5.0 mass% of SiO₂, and 0.05 to 5.0 mass% of V₂O₅, each formed article is fired. All characteristics (bending strengths at ordinary temperature and 1300°C, resistance to oxidation at 1300°C, creep resistance, and temperature of bearable thermal shock) of the resultant sintered articles are satisfactory. On the other hand, in Comparative Examples 4 to 28, the resultant sintered articles have insufficient characteristics.

### (Example 2, Comparative Example 29)

A fine structure of the oxide-bonded silicon carbide material (sintered article) obtained in Example 2 was observed with a scanning type electronic microscope (SEM). The results are shown in FIG. 1. On the other hand, in Comparative Example 29, a fine structure of the oxide-bonded silicon carbide material available on the market with a trade name of CATARON from NGK Insulators, LTD. was observed with the SEM. The results are shown in Table 2.

### (Consideration: Example 2, Comparative Example 29)

In the fine structure of the oxide-bonded silicon carbide material (sintered article) obtained in Example 2, as shown in FIG. 1, a texture of silicon carbide crystal particles as aggregates and silicon dioxide of bonding portions during firing can be controlled, and densely sintered. On the other hand, in Comparative Example 29, as shown in FIG. 2, it is difficult to densely sinter the texture, because a very large amount of pores exist in silicon dioxide constituting the bonding portions between the SiC particles as the aggregates during the firing, and an SiC particulate portion.

Therefore, in Example 2, the bending strength at ordinary temperature is 213 MPa, and the bending strength at 1300°C is 221 MPa. On the other hand, in Comparative Example 29, the bending strength at ordinary temperature is 50 MPa, and the bending strength at 1300°C is 30 MPa.

As described above, it has been confirmed that in the oxide-bonded silicon carbide material (Example 2) of the present invention, the bending strength at ordinary temperature or a high temperature can be fourfold or more as compared with the conventional oxide-bonded silicon carbide material (Comparative Example 29).

In the present invention, an oxide-bonded silicon carbide material is preferably usable in, for example, kiln tools for firing ceramics, such as a shelf board (setter), a floor plate, a sheath, a setter support, a beam, and a roller as well as a material having a wear resistance peculiar to SiC.
There is disclosed an oxide-bonded silicon carbide material which has a more excellent strength as compared with a presently mainly available high-strength ceramic material (e.g., alumina, Si-impregnated SiC, or re-crystallized SiC refractory material) and which improves mass productivity and facilitates the manufacturing of large-sized products, so that even products having complicated shapes can be easily prepared, and manufacturing costs can be largely reduced. The oxide-bonded silicon carbide material is substantially made of silicon carbide, has crystal particles of silicon carbide, grain boundaries and pores thereof, and has a structure in which the crystal particles of silicon carbide are bonded with an oxide containing silicon dioxide as a main component. A bending strength at ordinary temperature (22°C) or a high temperature (1300°C) is 100 MPa or more, and a bulk specific gravity is 2.65 or more.

## Claims

1. An oxide-bonded silicon carbide material substantially made of silicon carbide, comprising crystal particles of silicon carbide, grain boundaries and pores therebetween, and having a structure in which the crystal particles of silicon carbide are bonded via an oxide containing silicon dioxide as the main component,
wherein a bending strength at both ordinary temperature of 22 °C and a high temperature of 1300 °C is 100 MPa or more, and a bulk specific gravity is 2.65 or more,
wherein the crystal particles of silicon carbide are mixed particles containing aggregates having substantially a large particle diameter whose maximum particle diameter of the aggregate is in a range of 50 µm to 200 µm and fine particles made of fine crystal particles of silicon carbide whose a maximum particle diameter is 10 µm or less,
wherein the fine particles are uniformly dispersed around the vicinity of the aggregates, and bonding portions have a structure being made of a mixed state of the fine particles and an oxide containing silicon dioxide as a main component,
wherein the bonding portions where the silicon carbide crystal particles are bonded to one another are made of an oxide containing silicon dioxide as a main component, and contain further, as a minor component, at least one element selected from the group consisting of transition metal elements of atomic numbers 22 to 29,
the oxide-bonded silicon carbide material containing 85 to 99.5 mass% of silicon carbide; 10 to 0.45 mass% of silicon dioxide; and 5.0 to 0.05 mass% of at least one element selected from the group consisting of the transition metal elements of atomic numbers 22 to 29 as a minor component in terms of an oxide, and
wherein the oxide-bonded silicon carbide material is obtainable by cast-forming a formed article which is a precursor of the oxide-bonded silicon carbide material, and then firing the formed article in the atmosphere.

2. The oxide-bonded silicon carbide material according to claim 1, wherein a film is formed on the surface of the material; said film being made of silicon dioxide, as a main component, and containing further at least one element selected from the group consisting of the transition metal elements of atomic numbers 22 to 29.

## Patentansprüche

1. Oxidgebundenes Siliziumcarbidmaterial, das im Wesentlichen aus Siliziumcarbid hergestellt ist, umfassend Kristallteilchen aus Siliziumcarbid, Korngrenzen und Poren dazwischen, und mit einer Struktur, in welcher die Kristallteilchen aus Siliziumcarbid über ein Siliziumdioxid als den Hauptbestandteil enthaltendes Oxid gebunden sind,
wobei eine Biegefestigkeit sowohl bei normaler Temperatur von 22°C als auch einer hohen Temperatur von 1300°C 100 MPa oder mehr beträgt und eine Schüttdichte 2,65 oder mehr beträgt,
wobei die Kristallteilchen aus Siliciumcarbid gemischte Teilchen sind, die Aggregate, die im Wesentlichen einem großen Teilchendurchmesser aufweisen, deren maximaler Teilchendurchmesser des Aggregats in einem Bereich von 50 µm bis 200 µm liegt und feine Teilchen, die aus feinen Kristallteilchen aus Siliziumcarbid hergestellt sind, deren maximaler Teilchendurchmesser 10 µm oder weniger beträgt, enthalten,
wobei die feinen Teilchen gleichmäßig um die Umgebung der Aggregate verteilt sind und Bindungsabschnitte eine Struktur aufweisen, die aus einem gemischten Zustand der feinen Teilchen und einem Siliziumdioxid als einen Hauptbestandteil enthaltenden Oxid gemacht sind,
wobei die Bindungsabschnitte, wo die Siliziumcarbidkristallteilchen aneinander gebunden sind, aus einem Siliziumdioxid als einen Hauptbestandteil enthaltenden Oxid gemacht sind und ferner als einen Nebenbestandteil zumindest ein Element ausgewählt aus der Gruppe bestehend aus Übergangsmetallelementen der Ordnungszahlen 22 bis 29 enthalten,
das oxidgebundene Siliziumcarbidmaterial enthält 85 bis 99,5 Masse% an Siliziumcarbid; 10 bis 0,45 Masse% an Siliziumdioxid; und 5,0 bis 0,05 Masse% zumindest eines Elements ausgewählt aus der Gruppe bestehend aus den Übergangsmetallelementen der Ordnungszahlen 22 bis 29 als ein Nebenbestandteil in Form eines Oxids, und
wobei das oxidgebundene Siliziumcarbidmaterial durch Gießformen eines Formgegenstands, welcher ein Vorläufer des oxidgebundenen Siliziumcarbidmaterials ist, und dann Brennen des Formgegenstands in der Atmosphäre erhältlich ist.

2. Oxidgebundenes Siliziumcarbidmaterial nach Anspruch 1,
wobei ein Film auf der Oberfläche des Materials gebildet ist; wobei der Film aus Siliziumdioxid als einen Hauptbestandteil ist hergestellt und ferner zumindest ein Element ausgewählt aus der Gruppe bestehend aus den Übergangsmetallelementen der Ordnungszahlen 22 bis 29 enthält.

## Revendications

1. Matériau de carbure de silicium lié par un oxyde composé substantiellement de carbure de silicium, comprenant des particules cristallines de carbure de silicium, des joints de grains et des pores entre ceux-ci, et ayant une structure dans laquelle les particules cristallines de carbure de silicium sont liées par l'intermédiaire d'un oxyde contenant du dioxyde de silicium comme le composant principal,
dans lequel une résistance à la flexion à la fois à la température ordinaire de 22°C et à une température élevée de 1 300°C est 100 MPa ou plus, et une densité apparente est 2,65 ou plus,
dans lequel les particules cristallines de carbure de silicium sont des particules mixtes contenant des agrégats ayant substantiellement un grand diamètre de particules dont le diamètre maximum de particules de l'agrégat est dans une plage de 50 µm à 200 µm et des particules fines constituées de particules cristallines fines de carbure de silicium dont un diamètre maximum de particules est 10 µm ou moins,
dans lequel les particules fines sont uniformément dispersées autour des alentours des agrégats, et des parties de liaison ont une structure étant constituée d'un état mixte des particules fines et d'un oxyde contenant du dioxyde de silicium comme un composant principal,
dans lequel les parties de liaison où les particules cristallines de carbure de silicium sont liées les unes aux autres sont constituées d'un oxyde contenant du dioxyde de silicium comme un composant principal, et contiennent en outre, comme un composant mineur, au moins un élément choisi parmi le groupe consistant en des éléments de métaux de transition de nombres atomiques 22 à 29,
le matériau de carbure de silicium lié par un oxyde contenant 85 à 99,5% en masse de carbure de silicium ; 10 à 0,45% en masse de dioxyde de silicium ; et 5,0 à 0,05% en masse d'au moins un élément choisi parmi le groupe consistant en les éléments de métaux de transition de nombres atomiques 22 à 29 comme un composant mineur en termes d'un oxyde, et
dans lequel le matériau de carbure de silicium lié par un oxyde peut être obtenu par formation par coulée d'un article formé qui est un précurseur du matériau de carbure de silicium lié par un oxyde, et ensuite par chauffage de l'article formé dans l'atmosphère.

2. Matériau de carbure de silicium lié par un oxyde selon la revendication 1, dans lequel un film est formé sur la surface du matériau ; ledit film étant constitué de dioxyde de silicium, comme un composant principal, et contenant en outre au moins un élément choisi parmi le groupe consistant en les éléments de métaux de transition de nombres atomiques 22 à 29.
